Europäisches Patentamt

European Patent Office

Office européen des brevets

(19)

(11) Publication number: **0 146 912**
**B1**

# (12) EUROPEAN PATENT SPECIFICATION

(45) Date of publication of patent specification: **24.05.89**

(51) Int. Cl.⁴: **C 04 B 18/08**

(21) Application number: **84115760.5**

(22) Date of filing: **19.12.84**

(54) A method of producing a suspension of fly-ashes in water and an installation for realisation of this method.

(30) Priority: **19.12.83 PL 245199**

(43) Date of publication of application:
**03.07.85 Bulletin 85/27**

(45) Publication of the grant of the patent:
**24.05.89 Bulletin 89/21**

(84) Designated Contracting States:
**AT BE DE FR GB IT NL**

(56) References cited:
**DE-B-1 253 854**
**GB-B- 727 735**
**US-A-2 344 347**
**US-A-4 390 281**

**PROCEEDINGS OF THE INSTITUTION OF MECHANICAL ENGINEERS, vol. 176, no. 19, 1962, pages 449-467, London, GB; S.H. DAWSON et al.: "Pulverized-fuel ash disposal"**

The file contains technical information submitted after the application was filed and not included in this specification

(73) Proprietor: **Zaklady Produkcji Urzadzen Mechanicznych im. Janka Krasickiego "ELWO"**
**ul. Bielska 44**
**Pszczyna (PL)**

(73) Proprietor: **Biuro Studiow i Projektow Energetycznych "ENERGOPROJEKT"**
**ul. Jesionowa 15**
**Katowice (PL)**

(72) Inventor: **Saternus, Antoni**
**ul. Bojszowska 68**
**Tychy-Bierun Stary (PL)**
Inventor: **Miczek, Ludwik**
**ul. Wyspianskiego 18a**
**Pszczyna (PL)**
Inventor: **Bartnik, Mieczyslaw**
**ul. Brzozowa 8**
**Gliwice (PL)**

(74) Representative: **Hansen, Bernd, Dr.rer.nat. et al Hoffmann, Eitle & Partner Patentanwälte Arabellastrasse 4 Postfach 81 04 20 D-8000 München 81 (DE)**

(56) References cited:
**BRENNSTOFF-WÄRME-KRAFT, vol. 22, no. 1, January 1970, pages 16,17; F. BAUER: "Schlacken- und Flugaschen-Förderanlage im 800 MW-Kraftwerk "Gyöngyös"**

## Description

The subject of the invention is a method of continuous production of a suspension of fly-ashes in water of a high ash concentration with eventual adding of bottom ash and a device for realisation of this method.

The known and hitherto applied method of preparing an ash suspension consists on that dry ash from under the dust-collecting equipment is directed to the flushing apparatus of different type or to ejectors, which are supplied with water at the weight ratio of several or a dozen or so times bigger than the ash weight. A big amount of water is required to reduce surface tensions of ash dust to achieve full moisturing, i.e. to obtain a suspension. The said suspension of a low concentration is sedimentable because it does not have the characteristics of a heavy liquid. It is eventually fed with a portion of slag directly to drag pumps which force it through to the storage yard by pipelines.

The hydrotransport installation operating with such a suspension requires a large amount of water which is obtained by recycling of water from the storage yard by return pipelines.

These inconveniences have been eliminated in another known method of preparing a mixture with a high ash concentration, which is the subject of the invention according to the application No. P-218778. However, the undesired characteristic of the said second method is that the process of preparing the suspension is cyclic and in order to achieve continuous operation of the hydro-transport installation itself, it is necessary to use at least two identical devices operating cyclically and alternately, as well as to install a storage reservoir of a relatively big capacity, in which the turbulent state of the suspension is maintained by aeration. Moreover, the applied mixers are characterized not only by cyclic operation but also by irregularity of loading the drives in the whole single cycle of mixing of one cycle, what results in overloading or underloading of electric motors, i.e. worsening their working conditions and, in consequence, abatement of service reliability of the whole installation. The aeration process itself lowers the threshold of the beginning of cavitation in the flow system of the pump, thus having a definitely negative effect of the maintenance time of the pump.

The object of the invention is to obtain a mixture of ash with water, having physical properties similar to those of heavy liquid, in a continuous manner which will make it possible to reduce the investment cost and to increase applicability of the installation by the elimination of cyclically operating devices, to resign or to decrease considerably retention of elements of the said installation, to improve working conditions of pumps, and to compensate loads of drives, and the installation for realisation of this method.

The subject of the invention is a method of continuous production of an ash suspension in water with eventual adding of bottom ash and the installation for application of this method. The essence of the invention consists in that the production process is divided into subsequent stages and is carried out in separate zones of one flow device called a flow mixer. The first stage is the moisturing stage. At this stage water is added to dry ash in the amount of up to 0.2 parts of water per 1 part of ash, and slow backfall mixing is carried out. At this stage a dense-plastic non-liquid moist ash mix of high heterogeneity is produced. Next, said mix passes to the second stage called the homogenization state. At this stage further intensive non-turbulent mechanical mixing is carried out, providing the homogenization of ash mix. At this stage the mix is not fluidized because the amount of water so far fed is insufficient for surpassing the fluidization point. Apart from homogenization, at this stage slight dethickening of the mix occurs. The third stage, called the stage of fluidization and full discharge of surface tension of dust, is characterized in that water is added in the amount necessary to transform the dense-plastic mix into the fluid state and to reach the desired concentration at the ratio of 2.5 up to 5.0 parts of ash per 1 part of water. At this stage the fluidized suspension is put into intensive turbulent circumferential motion, wherein ash is carried through areas of a variable increasing velocity gradient, whereby dust lumps are ground and full electrostatic discharge on surfaces of dust grains occurs, and the suspension gains physical properties of the heavy liquid. In order to intensify the process of producing the suspension it is advisable to feed instead of ordinary water, water with a large amount of ions, e.g. saline mine water, waste water from technological lines of chemical water treatment or water with other components undergoing electrolytic dissociation. At the third stage slag or granular ash is eventually added, which by the same hydraulic-draining installation of ash can be fed to the storage yard, together with the ash suspension.

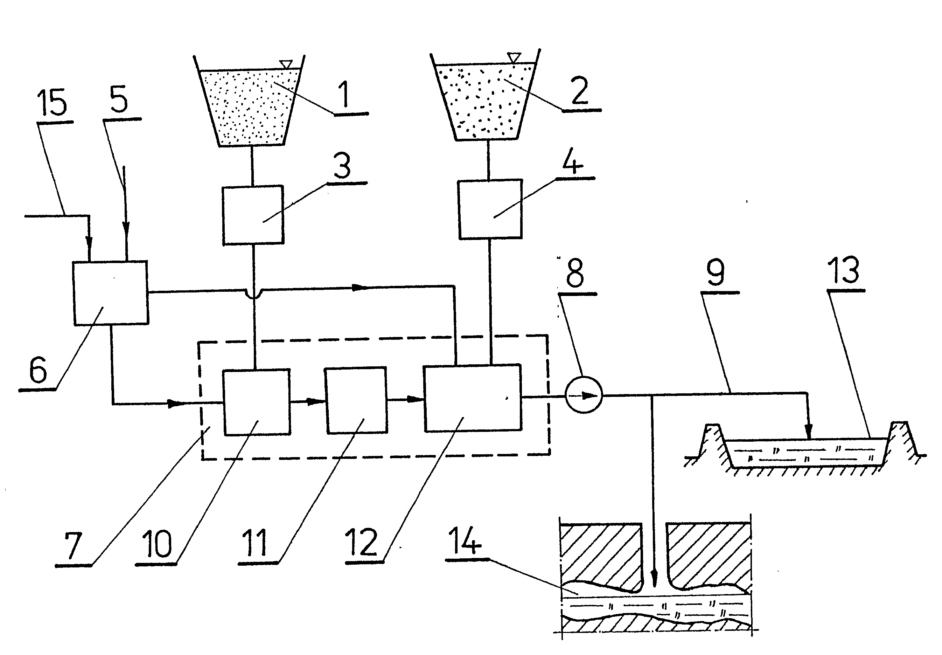

The example of the installation for realisation of the said method of producing the suspension is presented schematically in the drawing. The installation for producing the suspension of fly-ashes comprises an ash bunker 1, a slag or granular ash bunker 2, an ash continuous feeder 3, a slag or granular ash continuous feeder 4, a water system 5, a water continuous feeder 6, and a flow mixer 7, and together with a drag pump 8 and external pipelines 9 forms an installation of hydraulic draining of ash and slag or granular ash. The flow mixer has three separate zones: a moisturing zone 10, a homogenization stage zone 11 and a fluidization stage zone 12. To the water continuous feeder a pipeline 15 of water containing dissociated components can be connected.

The installation built in this manner serves for carrying ash with slag or granular ash by external pipelines to a superficial storage yard 13 or an underground mine excavation 14.

Preparation of the ash suspension in this example is carried out as follows:

Dry fly-ash from the bunker 1 is fed through the ash continuous feeder 3 to the moisturing zone 10 of the flow mixer 7. At the same time water from the system 5 or saliferous water from the pipeline 15·is fed through the water continuous feeder 6 to the abovementioned zone.

In the said zone ash is moistured and backfall-mixed whereby a dense-plastic non-fluid heterogeneously wet mix of ash is produced. The said mix is fed to the homogenization stage zone 11 where an intensive non-turbulent mixing homogenizes the ash mix and slightly dethickens it. Next, the mix is fed to the fluidization stage zone 12 to which water is fed through the intermediary of the water continuous feeder at the amount necessary for the required concentration level. The suspension thus obtained is subjected to an intensive turbulent mixing in such a way that as the mixture flows, the mixing intensity ratio increases. At the stage where the mix surpasses the fluidity point the suspension of the required concentration is obtained, and full discharge of electrostatic tensions on surfaces of dust grains takes place.

In the said zone the suspension gains physical properties of the heavy liquid. To the said zone slag or granular ash is fed through the intermediary of the continuous feeder 4. The liquefaction stage zone is left by a ready suspension which through the intermediary of the drag pump 8 and the external pipelines 9 is delivered to the superficial storage yard 13 or the underground mine excavation 14.

## Claims

1. A method of producing a suspension of fly-ashes in water of a high concentration of the order of 0.5 to 2.5 parts of ash per 1 part of water in a continuous technological process, characterized in that it proceeds in separate, different by type, subsequent stages, whereby at the first stage of moistening water is added in the amount of up to 0.2 parts of water per 1 part of ash and slow backfall mixing is carried out to yield an intermediate product in the form of a dense-plastic non-fluid mix, next, at the second stage of homogenization intensive non-turbulent mixing is carried out to homogenize the mix, and thereafter at the third stage of fluidization the fluidity moment of the mixture is surpassed and the required concentration thereof is established by adding water and the suspension thus obtained is subject to intensive turbulent mixing in such a way so as the mixture flows, the mixing intensity ratio increases, whereby eventually at this stage bottom ash is added, whereas water used in this method is ordinary water or it is preferably enriched with free ions by electrolytic dissociation by the known methods, and ash, bottom ash and water are fed continuously.

2. An installation for producing a suspension of fly-ashes in water, according to claim 1, characterized in that it has a flow mixer (7) whose zone of the moistening stage (10) is connected through an ash continuous feeder (3) with an ash bunker (1), and the zone of the fluidization stage (12) through a bottom ash continuous feeder (4) is connected with a slag or granulated ash bunker (2), whereby between the zone of the moistening stage (10) and the zone of the fluidization stage (12) the flow mixer has the zone of the homogenization stage (11), whereas a water continuous feeder (6) is connected at the inlet with an ordinary water pipeline (5) or with a preferably dissociated water pipeline (15) and at the outlet it is connected with the zone of the moistening stage (10) and with the zone of the fluidization stage (12), and the outlet of the flow mixer (7) is connected with the known installations of hydraulic transport of fly-ash and bottom slag to storage yards (13 and 14).

## Patentansprüche

1. Verfahren zur Herstellung einer hochkonzentrierten Suspension von Flugaschen in Wasser in einer Größenordnung von 0,5 bis 2,5 Teilen Asche pro 1 Teil Wasser, in einem kontinuierlichen technologischen Verfahren, dadurch gekennzeichnet, daß es in getrennten, nach Art unterschiedenen, aufeinanderfolgenden Stufen abläuft, wobei in der ersten Stufe der Befeuchtung Wasser in einer Menge bis zu 0,2 Teilen Wasser pro 1 Teil Asche zugesetzt wird und eine langsame Durchmischung erfolgt, um ein Zwischenprodukt in Form einer dichten, plastischen nicht-flüchtigen Mischung zu erhalten, wonach in der nächsten Stufe der Homogenisierung eine intensive, nicht-turbulente Vermischung erfolgt, um die Mischung zu homogenisieren und worauf in der dritten Stufe der Fluidisierung die Fließgrenze überschritten wird und die erforderliche Konzentration durch Zusatz von Wasser erreicht wird und daß die so erhaltene Suspension einem intensiven turbulenten Vermischen unterworfen wird, so daß die Mischung fließt, das Verhältnis der Mischungsintensität ansteigt, wobei gegebenenfalls in dieser Stufe Bodenasche zugesetzt wird, wohingegen das in diesem Verfahren verwendete Wasser gewöhnliches Wasser oder vorzugsweise mit durch übliche elektrolytische Dissoziation mit freien Ionen angereichertes Wasser ist und daß Asche, Bodenasche und Wasser kontinuierlich eingespeist werden.

2. Eine Einrichtung zur Herstellung einer Suspension von Flugaschen in Wasser nach Anspruch 1, dadurch gekennzeichnet, daß ein Durchflußmischer (7), dessen Zone der Befeuchtungsstufe (10) über eine kontinuierliche Aschezuführung (3) mit einem Aschenbunker (1) verbunden ist und die Zone der Fluidisierungsstufe (12) über eine kontinuierliche Bodenaschezuführung (4) mit einem Schlacke- oder granulierten Aschebunker (2) verbunden ist, wobei zwischen der Zone der Befeuchtungsstufe (10) und der Zone der Fluidisierungsstufe (12) der Durchflußmischer die Zone der Homogenisierungsstufe (11) aufweist, wohingegen eine kontinuierliche Wasserzuführung (6) an der Einströmöffnung mit einer gewöhnlichen Wasserleitung (5) oder mit einer Wasserleitung (15) für vorzugsweise Wasser mit dissoziierten Stoffen verbunden ist und an der Auslaßöffnung mit der Zone der Befeuchtungsstufe (10) und mit der Zone der Fluidisierungsstufe (12) verbunden ist, und daß die Auslaßöffnung des Durchflußmischers (7) mit bekannten Einrichtungen zum hydraulischen Transport von Flugasche und Bodenschlacke von den Aufbewahrungslagern (13 und 14) verbunden ist.

**Revendications**

1. Un procédé de production d'une suspension de cendres volantes dans l'eau à une concentration élevée de l'ordre de 0,5 à 2,5 parties de cendres pour 1 partie d'eau dans un procédé technologique continu, caractérisé en ce que le procédé se déroule dans des étages subséquents séparés, de types différents, procédé selon lequel dans un premier étage d'humidification, de l'eau est ajoutée en quantité atteignant 0,2 partie d'eau pour 1 partie de cendres et le mélange lent à chute arrière est conduit pour donner un produit intermédiaire sous la forme d'un mélange non fluide, plastique dense, dans un second étage d'homogénéisation, le mélange non turbulent intensif est conduit pour homogénéiser le mélange, et un troisième étage de fluidisation dans lequel le moment de fluidité du mélange est dépassé et sa concentration requise est établie par addition d'eau et la suspension ainsi obtenue est soumise à un mélange turbulent intensif de manière telle qu'à mesure que le mélange s'écoule, le rapport d'intensité de mélange croît, procédé selon lequel des cendres de fond sont éventuellement ajoutées à cet etage, tandis que l'eau utilisée dans le procédé est de l'eau ordinaire ou de l'eau préférablement enrichie avec des ions libres par dissociation électrolytique par des méthodes connues, et les cendres, les cendres de fond et l'eau sont alimentées en continu.

2. Une installation pour la production d'une suspension de cendres volantes dans l'eau, selon la revendication 1, caractérisée en ce que elle comporte un mélangeur à écoulement (7) dont la zone d'étage d'humidification (10) est reliée par l'intermédiaire d'un dispositif d'alimentation continue de cendres (3) avec un réservoir de cendres (1), et la zone de l'étage de fluidisation (12) est reliée par l'intermédiaire d'un dispositif d'alimentation continue de cendres de fond (4) à un réservoir de laitier ou de cendres granulées (2), en ce qu'entre la zone de l'étage d'humidification (10) et la zone de l'étage de fluidisation (12) le mélangeur à écoulement comporte une zone d'étage d'homogénéisation (11), tandis qu'un dispositif d'alimentation continue d'eau (6) est relié à son entrée avec une canalisation d'eau ordinaire (5) ou avec une canalisation d'eau de préférence dissociée (15) et à sa sortie il est relié à la zone d'étage d'humidification (10) et à la zone d'étage de fluidisation (12), et la sortie du mélangeur à écoulement (7) est reliée aux installations connues de transport hydraulique de cendres volantes et de laitier de fond au parc de stockage (13 et 14).